(19) Europäisches Patentamt
European Patent Office
Office européen des brevets

(11) **EP 4 566 692 A1**

(12) **EUROPEAN PATENT APPLICATION**
published in accordance with Art. 153(4) EPC

(43) Date of publication:
**11.06.2025  Bulletin 2025/24**

(21) Application number: **23862741.8**

(22) Date of filing: **13.06.2023**

(51) International Patent Classification (IPC):
**B01D 53/14** (2006.01)    **B01D 19/00** (2006.01)
**B01D 53/62** (2006.01)    **B01D 53/78** (2006.01)
**B01D 53/96** (2006.01)

(52) Cooperative Patent Classification (CPC):
**B01D 19/00; B01D 53/14; B01D 53/62;
B01D 53/78; B01D 53/96; C01B 32/50**

(86) International application number:
**PCT/JP2023/021980**

(87) International publication number:
**WO 2024/053196 (14.03.2024 Gazette 2024/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **05.09.2022  JP 2022140628**

(71) Applicants:
• **KABUSHIKI KAISHA KOBE SEIKO SHO (KOBE
STEEL, LTD.)
Hyogo 651-8585 (JP)**
• **NATIONAL UNIVERSITY CORPORATION TOKAI
NATIONAL
HIGHER EDUCATION AND RESEARCH SYSTEM
Nagoya-shi, Aichi 464-8601 (JP)**

(72) Inventors:
• **MAEDA, Norihide
Hyogo 651-2271 (JP)**
• **KISHIMOTO, Akira
Hyogo 651-2271 (JP)**
• **YOSHIZAWA, Mai
Hyogo 651-2271 (JP)**
• **MACHIDA, Hiroshi
Nagoya-shi, Aichi 464-8601 (JP)**
• **YAMAGUCHI, Tsuyoshi
Nagoya-shi, Aichi 464-8601 (JP)**
• **NORINAGA, Koyo
Nagoya-shi, Aichi 464-8601 (JP)**

(74) Representative: **TBK
Bavariaring 4-6
80336 München (DE)**

(54) **GAS TREATMENT METHOD AND GAS TREATMENT DEVICE**

(57) One aspect of the present invention is a gas treatment method including a step of causing a gas to be treated containing an acidic compound to be absorbed into a treatment solution phase-separated by absorption of the acidic compound, a step of separating the treatment solution, which is phase-separated into a first phase portion having relatively high content of the acidic compound and the second phase portion having relatively low content of the acidic compound as the acidic compound is absorbed, into a first solution mainly containing the first phase portion and a second solution mainly containing the second phase portion, a step of applying deoxygenation treatment to the separated second solution, and a step of heating the first solution together with the second solution to which the deoxygenation treatment is applied so as to release the acidic compound from the first solution and the second solution.

FIG.1

**Description**

**Technical Field**

The present invention relates to a gas treatment method and a gas treatment device.

**Background Art**

As a method of recovering $CO_2$ from a large volume of gas ($CO_2$-containing gas) containing carbon dioxide ($CO_2$), such as an exhaust gas from a power plant and a by-product gas in a blast furnace, various methods are known. Examples of such a method include a chemical absorption method such as an amine absorption method. The chemical absorption method is, for example, a method in which an alkaline aqueous solution such as an amine aqueous solution is used as an absorption solution (treatment solution), $CO_2$-containing gas is brought into contact with the absorption solution to absorb $CO_2$, and then the absorption solution that absorbs $CO_2$ is heated to release $CO_2$ from the absorption solution, and the released $CO_2$ is recovered.

In such a chemical absorption method, a large amount of thermal energy is required in a step of heating an absorption solution in which $CO_2$ is absorbed to release $CO_2$ from the absorption solution, what is called an absorption solution regenerating step. For this reason, a method of recovering $CO_2$ by a chemical absorption method increases cost (running cost) for separating and recovering $CO_2$. In order to reduce the running cost, reduction of energy required for separating and recovering an acidic compound such as $CO_2$ and the like have been studied.

Examples of a chemical absorption method capable of reducing running cost include a method described in Patent Literature 1. Patent Literature 1 describes a gas treatment method including an absorbing step of bringing gas to be treated containing an acidic compound that generates acid by dissolution in water and a treatment solution that phase-separates by absorption of the acidic compound into contact with each other in an absorber to cause the acidic compound contained in the gas to be treated to be absorbed into the treatment solution, a solution feeding step of feeding the treatment solution in which the acidic compound contained in the gas to be treated is absorbed from the absorber to a regenerator, and a regenerating step of heating the treatment solution in the regenerator to separate the acidic compound from the treatment solution. In the absorbing step, the treatment solution in contact with the acidic compound in the gas to be treated phase-separates into a first phase portion having high content of the acidic compound and a second phase portion having low content of the acidic compound, and in the solution feeding step, the treatment solution in a state in which the phase-separated first phase portion and second phase portion are mixed is introduced into the regenerator.

In order to further reduce cost (running cost) for separating and recovering an acidic compound such as $CO_2$, it is required to suppress deterioration of a treatment solution.

**Citation List**

**Patent Literature**

Patent Literature 1: JP 2018-187553 A

**Summary of Invention**

An object of the present invention is to provide a gas treatment method and a gas treatment device capable of suppressing deterioration of a treatment solution to be used and separating and recovering an acidic compound over a long period of time.

According to one aspect of the present invention, there is provided a gas treatment method including a step of bringing a gas to be treated containing an acidic compound that generates acid by being dissolved in water into contact with a treatment solution phase-separated by absorption of the acidic compound to cause the acidic compound to be absorbed into the treatment solution, a step of separating the treatment solution, which is phase-separated into a first phase portion having relatively high content of the acidic compound and a second phase portion having relatively low content of the acidic compound as the acidic compound is absorbed into the treatment solution, into a first solution mainly containing the first phase portion and a second solution mainly containing the second phase portion, a step of applying deoxygenation treatment to the separated second solution, and a step of heating the first solution together with the second solution to which the deoxygenation treatment is applied so as to release the acidic compound from the first solution and the second solution.

Further, according to another aspect of the present invention, there is provided a gas treatment device including an absorber that brings a gas to be treated containing an acidic compound that generates acid by being dissolved in water into contact with a treatment solution phase-separated by absorption of the acidic compound to cause the acidic compound to be absorbed into the treatment solution, a separator that separates the treatment solution, which is phase-separated into a first phase portion having relatively high content of the acidic compound and a second phase portion having relatively low content of the acidic compound as the acidic compound is absorbed into the treatment solution in the absorber, into a first solution mainly containing the first phase portion and a second solution mainly containing the second phase portion, a deoxygenation treatment unit that applies deoxygenation treatment to the separated second solution, and an emitter that heats the first solution together with the second solution to which the deoxygenation treatment is applied so as to release the acidic compound from the first solution and the second solution.

The above and other objects, features, and advantages of the present invention will be clear from detailed description below.

**Brief Description of Drawings**

FIG. 1 is a schematic view illustrating an example of a gas treatment device according to an embodiment of the present invention.
FIG. 2 is a schematic view illustrating another example of the gas treatment device according to the embodiment of the present invention.
FIG. 3 is a schematic view illustrating another example of the gas treatment device according to the embodiment of the present invention.
FIG. 4 is a schematic view illustrating another example of the gas treatment device according to the embodiment of the present invention.
FIG. 5 is a schematic view illustrating another example of the gas treatment device according to the embodiment of the present invention.
FIG. 6 is a schematic view illustrating another example of the gas treatment device according to the embodiment of the present invention.
FIG. 7 is a schematic view illustrating another example of the gas treatment device according to the embodiment of the present invention.
FIG. 8 is a schematic view illustrating another example of the gas treatment device according to the embodiment of the present invention.

**Description of Embodiments**

In the invention described in Patent Literature 1, as described above, a treatment solution that phase-separates by absorption of an acidic compound such as $CO_2$ is used. Examples of the treatment solution include a treatment solution containing water, an amine compound capable of acting as a chemical absorbent, and an organic solvent (an ether compound as a representative component) capable of acting as a physical absorbent. Such a treatment solution is a uniform one phase when an acidic compound is not absorbed, but is phase-separated into two phases when an acidic compound is absorbed. Specifically, the treatment solution separates into two phases of a first phase portion (amine phase) having relatively high acidic compound content and a second phase portion (organic solvent phase, ether phase) having relatively low acidic compound content. When a treatment solution, such as the treatment solution described in Patent Literature 1, which phase-separates by absorption of an acidic compound is used, a regeneration temperature (for example, less than 100°C) of the treatment solution in the regenerating step is lower than a regeneration temperature (For example, 120°C or more) in a case of using a general treatment solution which does not phase-separate by absorption of an acidic compound. Further, according to Patent Literature 1, when the second phase portion is introduced into the regenerator together with the first phase portion, energy required for separating an acidic compound can be reduced more than when the second phase portion having low content of the acidic compound is removed. This is considered to be because in the regenerating step, an amine compound that does not interact (bond) with an acidic compound shifts from the first phase portion to the second phase portion, and the acidic compound is easily released from the first phase portion.

However, the treatment solution contains a component that chemically gradually changes by use recovery of an acidic compound for a long period of time. The chemically changing component is a component constituting the first phase portion (a component mainly contained in the first phase portion) after the treatment solution phase-separates. Specifically, this component is the amine compound in case of a treatment solution containing an amine compound and an organic solvent. Since performance of the treatment solution is deteriorated by this change, it is necessary to replenish (or replace) a component constituting the first phase portion such as an amine compound in order to maintain performance of the treatment solution. In order to reduce cost (running cost) for separating and recovering an acidic compound such as $CO_2$, it is required to suppress deterioration of a treatment solution, that is, deterioration of a component constituting the first phase portion such as an amine compound.

As a result of various studies, the present inventors have found that the above object of providing a gas treatment method and a gas treatment device capable of suppressing deterioration of a treatment solution to be used and separating and recovering an acidic compound over a long period of time is achieved by the present invention below.

Hereinafter, embodiments according to the present invention will be described, but the present invention is not limited to these.

A gas treatment method according to an embodiment of the present invention is a method of separating and recovering an acidic compound from gas to be treated containing the acidic compound by using a treatment solution that phase-separates by absorption of the acidic compound that generates acid when dissolved in water.

In the gas treatment method, first, a gas to be treated containing the acidic compound is brought into contact with the treatment solution. By the above, the acidic compound is absorbed in the treatment solution. A treatment solution in which the acidic compound is absorbed phase-separates into a first phase portion having relatively high content of the acidic compound and a second phase portion having relatively low content of the acidic compound. Note that a step of bringing the gas to be treated into contact with the treatment solution to cause the acidic compound to be absorbed is hereinafter also referred to as an absorbing step.

In the gas treatment method, after the absorbing step, the solution is separated into a first solution mainly containing the first phase portion and a second solution mainly containing the second phase portion. As this separation, it is preferable to separate the solution into the first solution composed of the first phase portion and the second solution composed of the second phase portion, but the first solution may contain the second phase portion as long as the first solution mainly contains the first phase portion. Further, the second solution may contain the first phase portion as long as the second solution mainly contains the second phase portion. To mainly contain means that the phase portion contains, for example, 80 mass% or more, and is preferably 100 mass%. Note that the step of separating the first solution and the second solution is hereinafter also referred to as a separating step.

In the gas treatment method, deoxygenation treatment is applied to the second solution separated in the separating step. By applying this deoxygenation treatment, an amount of oxygen (dissolved oxygen) dissolved in the second solution can be reduced. Note that the step of applying the deoxygenation treatment to the second solution is hereinafter also referred to as a deoxygenation treatment step.

In the gas treatment method, the first solution is heated together with the second solution to which the deoxygenation treatment is applied. Examples of the heating include heating of a mixed solution obtained by mixing the first solution and the second solution to which the deoxygenation treatment is applied. By such heating, when the mixed solution (the first solution and the second solution) reaches a predetermined temperature or higher, the acidic compound can be released from the first solution and the second solution. Note that a step of heating the mixed solution (the first solution and the second solution) is hereinafter also referred to as a releasing step.

In the gas treatment method, among components contained in the gas to be treated, a component that is not absorbed by the treatment solution is not absorbed by the treatment solution in the absorbing step, and therefore is not released from the treatment solution in the releasing step. Further, since a component that is not easily absorbed by the treatment solution is not easily absorbed by the treatment solution in the absorbing step, an amount released from the treatment solution in the releasing step is small. Further, among components contained in the gas to be treated, a component that is absorbed by the treatment solution and is not released from the treatment solution even when the treatment solution is heated is also not released from the treatment solution in the releasing step. From these facts and the like, in the gas treatment method, as described above, the acidic compound is absorbed in the treatment solution and released from the treatment solution, so that the acidic compound of high concentration (concentration higher than concentration of the acidic compound in the gas to be treated) can be recovered. Further, in the gas treatment method, dissolved oxygen can be suitably removed from the second solution by applying deoxygenation treatment to the second solution in the deoxygenation treatment step. From this, in the gas treatment method, occurrence of deterioration (oxidative degradation) of the treatment solution due to dissolved oxygen can be suitably suppressed, and the acidic compound can be separated and recovered over a long period of time.

The gas to be treated only needs to be a gas containing the acidic compound, and may contain a gas other than the acidic compound. Examples of the gas other than the acidic compound include a gas that is not easily absorbed by the treatment solution, such as nitrogen. Specific examples of the gas to be treated include an exhaust gas from a power plant and a by-product gas in a blast furnace. Like the gas to be treated exemplified above, the gas to be treated generally contains not only the acidic compound but also a gas other than the acidic compound. Further, a gas other than the acidic compound is often less easily absorbed by the treatment solution than the acidic compound. In a case where a gas other than the acidic compound is not easily absorbed by the treatment solution, in the absorbing step, the acidic compound is absorbed by the treatment solution, but a component other than the acidic compound is not easily absorbed by the treatment solution. From the above, in the gas treatment method, it is possible to recover an acidic compound having high concentration (concentration higher than concentration of the acidic compound in the gas to be treated).

The acidic compound is not particularly limited as long as the acidic compound is a compound that generates acid when dissolved in water. Examples of the acidic compound include an acidic compound contained in an exhaust gas from a power plant, a by-product gas in a blast furnace, and the like. More specifically, examples of the acidic compound include carbon dioxide and sulfur compounds such as sulfur oxide (SOx) and hydrogen sulfide.

As described above, the treatment solution is a treatment solution that phase-separates into the first phase portion having relatively high acidic compound content and the second phase portion having relatively low acidic compound content by absorption of the acidic compound. Examples of the treatment solution include an aqueous solution of an amine compound. The aqueous solution of the amine compound may further contain an organic solvent. As the treatment solution, for example, a treatment solution containing water, an amine compound, and an organic solvent is preferably used. That is, the treatment solution is preferably a treatment solution that contains water, an amine compound, and an organic solvent, and phase-separates into the first phase portion and the second phase portion. Such a treatment solution is preferable since the treatment solution suitably phase-separates by absorption of the acidic compound, and temperature (regeneration temperature) of the treatment solution at which the acidic compound can be released from the treatment solution can be suitably lowered. Further, the first phase portion is a phase in which content of the amine compound is higher than content of the amine compound in the second phase portion, and is hereinafter also referred to as an amine phase. The second phase portion is a phase in which content of the organic solvent is higher than content of the organic solvent in the first phase portion. From the above, hereinafter, the second phase portion is also referred to as an ether phase or an organic phase because a representative component of the organic solvent is an ether compound.

The amine compound is not limited to a primary amine, and examples of the amine compound include a secondary amine and a tertiary amine. Examples of the primary amine include 2-aminoethanol [MEA: solubility parameter = 14.3 $(cal/cm^3)^{1/2}$] and 2-(2-aminoethoxy) ethanol [AEE: solubility parameter = 12.7 $(cal/cm^3)^{1/2}$]. Examples of the secondary amine include 2-(methylamino) ethanol [MAE: solubility parameter = 12.5 $(cal/cm^3)^{1/2}$] and 2-(ethylamino) ethanol [EAE: solubility parameter = 12.0 $(cal/cm^3)^{1/2}$]. Examples of the tertiary amine include triethanolamine (TEA), N-methyldiethanolamine (MDEA), tetramethylethylenediamine (TEMED), pentamethyldiethylenetriamine (PMDETA), hexamethyltriethylenetetramine, and bis (2-dimethylaminoethyl) ether. These amine compounds may be used alone or two or more types of them may be used in combination.

Examples of the organic solvent include 1-butanol (solubility parameter = 11.3 $(cal/cm^3)^{1/2}$), 1-pentanol (solubility parameter = 11.0 $(cal/cm^3)^{1/2}$), octanol, diethylene glycol diethyl ether (DEGDEE: solubility parameter = 8.2 $(cal/cm^3)^{1/2}$), and diethylene glycol dimethyl ether (DEGDME). These organic solvents may be used alone or two or more types of them may be used in combination.

In a case where the treatment solution is a treatment solution containing the amine compound, the organic solvent, and water, content of the amine compound is preferably 20 mass% or more and less than 40 mass%. Further, content of the organic solvent is preferably 40 mass% or more and 60 mass% or less. Further, in the treatment solution, water is the balance, and content of water is preferably, for example, more than 0 mass% and 20 mass% or less. Examples of the treatment solution include a treatment solution containing 30 mass% of the amine compound, 60 mass% of the organic solvent, and 10 mass% of water. Further, the treatment solution may contain other components such as an ionic solution in addition to the amine compound, the organic solvent, and water.

In a case where the treatment solution is a treatment solution containing the amine compound, the organic solvent, and water, a value (solubility parameter difference) obtained by subtracting a parameter of the organic solvent from a solubility parameter of the amine compound is preferably 1.1 $(cal/cm^3)^{1/2}$ or more and 4.2 $(cal/cm^3)^{1/2}$ or less. Note that the solubility parameter is determined by Formula (1) below.

$$\delta = [(\Delta H - RT)/V]^{1/2} \qquad (1)$$

In Formula (1), $\delta$ represents a solubility parameter, $\Delta H$ represents molar latent heat of vaporization, R represents a gas constant, T represents an absolute temperature, and V represents molar volume.

A state of the treatment solution after absorbing carbon dioxide in a case where the treatment solution contains an amine compound, an organic solvent, and water will be described. As the treatment solution, a treatment solution containing 30 mass% of an amine compound, 60 mass% of an organic solvent, and 10 mass% of water was used, and a state of the treatment solution in each of various combinations of the amine compound and the organic solvent was changed. A result of the observation is shown in Table 1. Note that Table 1 shows a solubility parameter of the amine compound, a solubility parameter of the organic solvent, a value (solubility parameter difference) obtained by subtracting the solubility parameter of the organic solvent from the solubility parameter of the amine compound, and a state of the treatment solution after absorbing carbon dioxide. In Table 1, "good" shows that the treatment solution was a single liquid phase before absorption of carbon dioxide and was separated into two liquid phases by absorption of carbon dioxide. Further, "not miscible" in Table 1 shows that the treatment solution was in a two liquid phase state before absorption of carbon dioxide, and a single liquid phase was not formed. Further, "not separated" in Table 1 shows that the treatment solution was a single liquid phase even after absorption of carbon dioxide. Further, "-" in Table 1 shows that the treatment solution in this combination was not observed and there is no result of observation. Note that since the solubility parameter of the amine compound and the solubility parameter of the organic solvent shown in Table 1 are described only to one decimal place due to significant figures, a value obtained by subtracting the solubility parameter of the organic solvent from the solubility parameter of the amine compound includes a rounding error, and may not be the difference between the solubility parameters shown in Table 1.

[Table 1]

| Solubility parameter difference/two phase separation capability | | Organic solvent/solubility parameter [(cal/cm$^3$)$^{1/2}$] | | |
|---|---|---|---|---|
| | | 1-butanol | 1-pentanol | DEGDEE |
| | | 11.3 | 11.0 | 8.2 |
| Amine compound/- solubility parameter [(cal/cm$^3$)$^{1/2}$] | MEA | 3.0 | 3.3 | 6.1 |
| | 14.3 | Good | Good | Not miscible |
| | AEE | 1.4 | 1.7 | 4.5 |
| | 12.7 | Good | Good | Not miscible |
| | MAE | 1.2 | 1.5 | 4.4 |
| | 12.5 | Good | Good | Not miscible |
| | EAE | 0.7 | | 3.8 |
| | 12.0 | Not separated | | Good |

Table 1 shows that, in a case where the treatment solution contains an amine compound, an organic solvent, and water, a value (solubility parameter difference) obtained by subtracting a solubility parameter of the organic solvent from a solubility parameter of the amine compound is preferably within a predetermined range. Specifically, the solubility parameter difference is preferably 1.1 (cal/cm$^3$)$^{1/2}$ or more and 4.2 (cal/cm$^3$)$^{1/2}$ or less, and more preferably 1.2 (cal/cm$^3$)$^{1/2}$ or more and 3.8 (cal/cm$^3$)$^{1/2}$ or less. By selecting the amine compound and the organic solvent so that the solubility parameter difference falls within the above range, the treatment solution can absorb carbon dioxide, and is in a one phase state before absorption of carbon dioxide, but is in a two phase state after absorption of carbon dioxide. That is, the treatment solution phase-separates by absorption of carbon dioxide. When the solubility parameter difference is too small, even if carbon dioxide is absorbed in obtained liquid, phase separation tends not to occur. Further, when the solubility parameter difference is too large, obtained liquid tends to be in a two phase state before absorption of carbon dioxide. In this two phase state, mixing of an organic solvent and water is insufficient, and an amine compound is contained more in any phase, for example, an aqueous phase. Even if the gas to be treated is brought into contact with liquid in such a state, a contact state between the liquid and the gas to be treated becomes uneven, and absorption efficiency may be reduced.

When the treatment solution is used for a long period of time to recover the acidic compound as described above, the treatment solution is gradually deteriorated. That is, the treatment solution contains a component that gradually deteriorates chemically when used for recovery of an acidic compound for a long period of time. This representative component that deteriorates is a component constituting the first phase portion, and is an amine compound in the case of a treatment solution containing an amine compound, an organic solvent, and water.

Examples of deterioration of an amine compound first include deterioration that is degradation caused by heating, that is, thermal degradation. In the gas treatment method, since a treatment solution that phase-separates by absorption of an acidic compound is used, the regeneration temperature can be lowered as compared with a case of using another treatment solution (treatment solution that does not phase-separate). Therefore, it is considered that deterioration of an amine compound is sufficiently suppressed.

Examples of the deterioration include, other than the thermal degradation, deterioration in which the amine compound is degraded by being oxidized with oxygen (dissolved oxygen) dissolved in the treatment solution, that is, oxidative degradation. In the gas treatment method, since thermal degradation is suppressed, it is considered that influence of the oxidative degradation is large. In order to suppress the oxidative degradation considered to have a large influence, the present inventors have focused on reducing dissolved oxygen in the treatment solution by applying deoxygenation treatment to the treatment solution. At that time, the present inventors have also studied a place where deoxygenation treatment is performed. As a result, it has been found that a composition of the first phase portion and the second phase portion is as described below. An amine phase, which is the first phase portion, has relatively high polarity since content of the amine compound is relatively high (content of the organic solvent: the ether compound is relatively low). Therefore, the amine phase as the first phase portion has relatively high content of water and relatively low content of dissolved oxygen. On the other hand, an ether phase as the second phase portion has relatively high content of the ether compound (relatively low content of the amine compound), and thus has relatively low polarity. Therefore, the ether phase as the second phase portion has relatively low content of water and relatively high content of dissolved oxygen. When deoxygenation treatment is applied to the treatment solution, it is conceivable to apply deoxygenation treatment to the entire treatment solution in order to reduce dissolved oxygen in the treatment solution as much as possible. It is also conceivable to apply deoxygenation treatment to the first solution mainly containing an amine phase, which is the first phase portion containing a large amount of an amine compound to be oxidatively degraded. The present inventors have found that, as a place to apply deoxygenation treatment, it is effective to suppress oxidative degradation of the amine compound by employing a second solution mainly containing the second phase portion instead of or in addition to application of deoxygenation treatment to them (the entire treatment solution and the first solution). That is, the present inventors have found that it is effective to apply the deoxygenation treatment to the second solution mainly containing the second phase portion in order to suppress oxidative degradation of a component constituting the first phase portion (component mainly contained in the first phase portion: amine compound). From the above, the present inventors have found that it is effective to apply the deoxygenation treatment to the second solution, not the first solution mainly containing the first phase portion containing a large amount of components to be oxidatively degraded in order to suppress oxidative degradation of a component constituting the first phase portion (component mainly contained in the first phase portion). Further, when treating an oxidizing atmosphere gas such as exhaust gas, oxidative degradation is generally more problematic than thermal degradation. Also from this point of view, it is considered that the fact that oxidative degradation can be efficiently suppressed suitably contributes to efficiently suppressing deterioration of the treatment solution to be used.

Furthermore, in the gas treatment method, deoxygenation treatment is applied to the second solution before the first solution and the second solution are mixed. From the above, deoxygenation treatment is applied to the second solution, which is a part of the treatment solution before the treatment solution is heated and an acidic compound is released from the treatment solution. From the above, the treatment solution to which deoxygenation treatment is applied is obtained at the time of heating when an acidic compound is released from the treatment solution. Since oxidative degradation is more likely to occur as temperature is higher, by applying deoxygenation treatment to the second solution, which is a treatment solution before being mixed with the first solution, the deoxygenation treatment is applied before heating for releasing the acidic compound from the treatment solution, and it is considered that oxidative degradation can be effectively suppressed.

From the above, thermal degradation of the treatment solution can be suppressed, and oxidative degradation of the treatment solution can also be efficiently suppressed. Therefore, deterioration of the treatment solution to be used is suppressed, and an acidic compound can be separated and recovered continuously over a long period of time. That is, an acidic compound can be separated and recovered continuously over a long period of time without replenishing or replacing the treatment solution.

In order to confirm that the gas treatment method exhibits effectiveness of suppressing deterioration of a treatment solution to be used and enabling separation and recovery of an acidic compound continuously over a long period of time, a matter below was examined.

Dissolved oxygen concentration in a treatment solution containing 30 mass% of EAE as an amine compound, 60 mass% of DEGDEE as an organic solvent, and 10 mass% of water, the treatment solution being a representative treatment solution as the above treatment solution, was calculated. The dissolved oxygen concentration was obtained from "sum of molar fraction of each component × dissolved oxygen concentration obtained from Henry's constant assuming that each component (EAE, DEGDEE, and water) is a pure substance". Further, Henry's constant was obtained by fitting based on dissolved oxygen concentration predicted by the PSRK model. As a calculation condition here, a temperature of 50°C, a carbon dioxide partial pressure of 15 kPa, an oxygen partial pressure of 5 kPa, a Henry constant of EAE of 66,690 kPa, a Henry constant of DEGDEE of 63,406 kPa, and a Henry constant of water of 5,314,267 kPa were used. A result of the calculation is shown in Table 2.

[Table 2]

| | | Concentration | | | |
|---|---|---|---|---|---|
| | | EAE (mol%) | DEGDEE (mol%) | Water (mol%) | Dissolved oxygen (ppm) |
| Second phase portion | Ether phase | 5.9 | 75.3 | 18.8 | 64 |
| First phase portion | Amine phase | 37.5 | 5.3 | 57.2 | 33 |
| Average value of first phase and second phase | | 26.7 | 29.3 | 44.0 | 44 |

In an average value of an amine phase as the first phase portion and an ether phase as the second phase portion (that is, a mixed phase of an amine phase and an ether phase), it is calculated that concentration of EAE is 26.7 mol% and concentration of dissolved oxygen is 44 ppm. On the other hand, in the ether phase, it is calculated that concentration of EAE is 5.9 mol% and concentration of dissolved oxygen is 64 ppm. Although a reaction mechanism of oxidative degradation of EAE is unknown, assuming that a reaction rate is proportional to the concentration of EAE and the concentration of dissolved oxygen in a first order manner, at the same temperature, the mixed phase was calculated to oxidize about 3.1 times [= (26.7 × 44)/(5.9 × 64)] faster than the second phase portion. From this result as well, it was confirmed that oxygen deterioration can be suppressed when only the ether phase is heated to degas oxygen, then mixed with the amine phase, and, after that, heated to a predetermined temperature, rather than when the amine phase and the ether phase are mixed and then heated to a predetermined temperature.

The deoxygenation treatment is not particularly limited as long as the treatment is capable of removing dissolved oxygen from the second solution by being applied to the second solution. Examples of the deoxygenation treatment include treatment of heating the second solution (heating treatment), treatment of bringing the second solution into contact with a deoxidizing agent (deoxidizing agent contact treatment), treatment of reducing pressure of the second solution (pressure reducing treatment), treatment of irradiating the second solution with an ultrasonic wave (ultrasonic irradiation treatment), treatment of supplying hydrogen to the second solution (hydrogen supply treatment), and treatment of bringing the second solution into contact with a noble metal catalyst while supplying hydrogen to the second solution (catalyst contact treatment). In the deoxygenation treatment, these treatments may be used alone, or two or more of these treatments may be used in combination.

The heating treatment is not particularly limited as long as the treatment can remove dissolved oxygen from the second solution by heating the second solution. The heating treatment is not particularly limited as long as a temperature (heating temperature) of the second solution is a temperature at which dissolved oxygen can be removed from the second solution. Further, a conditions of the heating treatment can be appropriately determined, and for example, a condition below is preferable. More specifically, the heating treatment is preferably heating treatment by which a temperature (heating temperature) of the second solution is equal to or more than a temperature at which dissolved oxygen can be removed from the second solution and lower than a temperature (regeneration temperature) of the treatment solution at which the acidic compound can be released from the treatment solution. If the heating temperature is too low, there is a tendency that the second dissolved oxygen cannot be sufficiently removed. Further, when the heating temperature is too high, (a component contained in) the treatment agent tends to evaporate.

The deoxidizing agent contact treatment is not particularly limited as long as the treatment can remove dissolved oxygen from the second solution by bringing the second solution into contact with a deoxidizing agent. The deoxidizing agent is not particularly limited, and is not particularly limited as long as the deoxidizing agent can remove dissolved oxygen from the second solution by being brought into contact with liquid containing dissolved oxygen.

The decompression treatment is not particularly limited as long as the treatment can remove dissolved oxygen from the second solution by reducing pressure of the second solution. Examples of the decompression treatment include treatment of reducing pressure of an atmosphere in which the second solution exists. Further, a condition of the decompression treatment can be appropriately determined, and is not particularly limited as long as, for example, pressure (degree of decompression) at the time of the decompression treatment is lower than pressure (absorption pressure) when oxygen is absorbed by the second solution. Further, the decompression treatment, treatment at pressure at which the second solution does not boil are preferable. That is, the decompression treatment is preferably performed at a vapor pressure or more of water which is a component that is most likely to boil among components of the treatment solution. When the degree of decompression is too low, there is a tendency that the second dissolved oxygen cannot be sufficiently removed. Further, when the degree of decompression is too high, (a component contained in) the treatment solution tends to evaporate (boil).

The ultrasonic irradiation treatment is not particularly limited as long as the treatment is capable of removing dissolved oxygen from the second solution by irradiating the second solution with an ultrasonic wave. Further, a condition of ultrasonic irradiation can be appropriately determined, and for example, irradiation time of the ultrasonic wave is preferably, for example, 30 minutes or less. If the irradiation time of the ultrasonic wave is too short, there is a tendency that the second dissolved oxygen cannot be sufficiently removed. Further, when the irradiation time of the ultrasonic wave is too long, an effect by the irradiation of the ultrasonic wave tends to saturate.

The hydrogen supply treatment is not particularly limited as long as the treatment can remove dissolved oxygen from the second solution by supplying hydrogen to the second solution. Further, the catalyst contact treatment is not particularly limited as long as the treatment can remove dissolved oxygen from the second solution by bringing the second solution into contact with a noble metal catalyst while supplying hydrogen to the second solution.

In the hydrogen supply treatment and the catalyst contact treatment, examples of a method of supplying hydrogen to the second solution include a method of supplying hydrogen to the second solution via a gas permeable membrane and a method of supplying hydrogen to the second solution by using a gas nozzle. Hydrogen can be dissolved in the second solution by supply of hydrogen via the gas permeable membrane or supply of hydrogen using a gas nozzle.

The gas permeable membrane is a membrane in which permeability of gas such as hydrogen is higher than permeability of a solution such as water, and specific examples of the gas permeable membrane include a membrane in which gas can permeate without permeating liquid. Examples of the gas permeable membrane include a membrane made from fluororesin such as polytetrafluoroethylene, a copolymer of tetrafluoroethylene and perfluoroalkoxyethylene (PFA), and polytetrafluoroethylene (PTFE). A shape of the gas permeable membrane is not limited, and the gas permeable membrane may be, for example, a flat membrane or a hollow fiber membrane, but a hollow fiber membrane is preferable. Further, the gas nozzle is not particularly limited as long as hydrogen can be supplied to the second solution.

The catalyst contact treatment is not particularly limited as long as the treatment can remove dissolved oxygen from the second solution by bringing the second solution into contact with a noble metal catalyst while supplying hydrogen to the second solution. A method of bringing the second solution into contact with a noble metal catalyst is not particularly limited, and is not particularly limited as long as the method is capable of bringing the second solution supplied with hydrogen into contact with a noble metal catalyst and removing dissolved oxygen from the second solution. Specifically, this method is a method of removing dissolved oxygen from the second solution by reacting dissolved oxygen contained in the second solution with hydrogen supplied to the second solution in the presence of the noble metal catalyst. The noble metal catalyst is not particularly limited as long as the catalyst is capable of promoting a reaction between dissolved oxygen contained in the second solution and hydrogen supplied to the second solution. Examples of the noble metal catalyst include a palladium catalyst, and more specifically, one in which metal palladium is supported on various carriers is preferable. Examples of the carrier include ion exchange resin, activated carbon, a synthetic adsorbent, and an inorganic exchanger. Further, specific examples of the method of bringing the second solution into contact with a noble metal catalyst include a method in which the second solution supplied with hydrogen is caused to continuously flow through a column filled with a noble metal catalyst such as the palladium catalyst to bring the second solution into contact with the noble metal catalyst.

The releasing step is not particularly limited as long as the acidic compound can be released from the first solution and the second solution by heating the first solution together with the second solution to which the deoxygenation treatment is applied. The acidic compound released here is preferably carbon dioxide. From the above, temperatures of the first solution and the second solution in the releasing step are preferably equal to or more than a temperature at which carbon dioxide absorbed in the first solution and the second solution is released from the first solution and the second solution (the treatment solution). Specifically, this temperature (heating temperature) is preferably 80°C or more and preferably less than 100°C.

In the releasing step, when releasing the acidic compound from the mixed solution (the first solution and the second solution), it is preferable to bring a gas that is hardly dissolved in the treatment solution into contact with the mixed solution. The gas that is hardly dissolved in the treatment solution is preferably hydrogen. That is, in the releasing step, it is preferable to bring hydrogen into contact with the mixed solution when releasing the acidic compound from the mixed solution. By bringing hydrogen into contact in this manner, a temperature at which carbon dioxide is released from the treatment solution is lowered, so that an acidic compound such as carbon dioxide can be separated and recovered from the gas to be treated with lower energy. In a case where hydrogen is supplied as described above, the heating temperature in the releasing step is specifically preferably 50°C or more and preferably 90°C or less.

Furthermore, in a case where deoxygenation treatment using hydrogen, such as the hydrogen supply treatment or the catalyst contact treatment, is used as the deoxygenation treatment, hydrogen supplied in this releasing step can also be supplied from a supply unit that supplies hydrogen in the deoxygenation treatment.

A device (gas treatment device) that performs the gas treatment method is not particularly limited as long as the absorbing step, the separating step, the deoxygenation treatment step, and the releasing step can be performed. Examples of the gas treatment device include a gas treatment device including an absorber that causes a gas to be treated containing the acidic compound to come into contact with a treatment solution that phase-separates by absorption of the acidic compound to allow the acidic compound to be absorbed into the treatment solution, a separator that causes the acidic compound to be absorbed into the treatment solution and separates the treatment solution that phase-separates into the first phase portion and the second phase portion into a first solution mainly containing the first phase portion and a second solution mainly containing the second phase portion in the absorber, a deoxygenation treatment unit that applies deoxygenation treatment to the separated second solution, and an emitter that heats the first solution together with the second solution to which the deoxygenation treatment is applied to release the acidic compound from the first solution and the second solution. In such a gas treatment device, the absorbing step is performed by the absorber, the separating step is performed by the separator, the deoxygenation treatment step is performed by the deoxygenation treatment unit, and the releasing step is performed by the emitter, so that deterioration of a treatment solution to be used is suppressed, and an acidic compound can be separated and recovered over a long period of time.

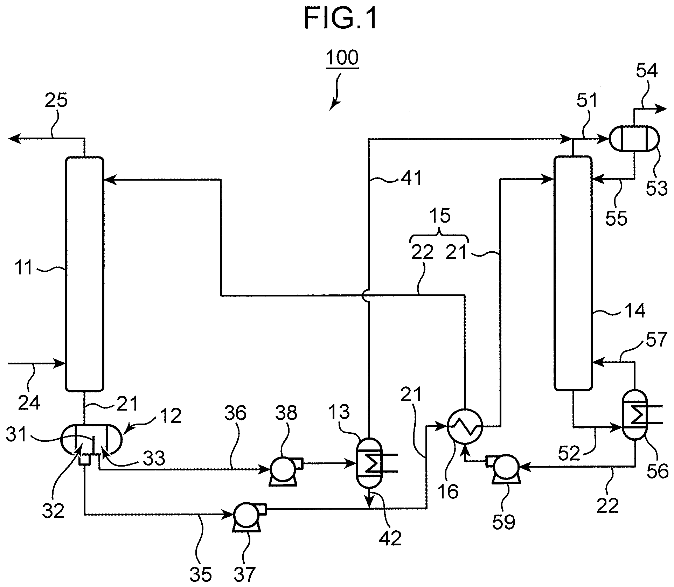

The gas treatment device is used to recover an acidic compound of high concentration from a gas to be treated containing the acidic compound by using the treatment solution. As illustrated in FIG. 1, specific examples of the gas treatment device 100 include a device including an absorber 11, a separator 12, a heater (deoxygenation treatment unit) 13, an emitter 14, a circulation path 15, and a heat exchanger 16. Note that FIG. 1 is a schematic view illustrating an example of the gas treatment device according to the present embodiment.

The circulation path 15 includes a first flow path 21 for extracting a treatment solution from the absorber 11 and introducing the treatment solution into the emitter 14, and a second flow path 22 for extracting a treatment solution from the emitter 14 and returning the treatment solution to the absorber 11. Note that the heat exchanger 16 can be omitted.

To the absorber 11, a gas supply path 24 for supplying a gas to be treated, a gas discharge path 25 for discharging gas after treatment in the absorber 11, the first flow path 21 for sending a treatment solution to the emitter 14, and the second flow path 22 for returning a treatment solution from the emitter 14 to the absorber 11 are connected. The gas supply path 24 allows a gas to be treated to be supplied to the absorber 11. The gas discharge path 25 allows a gas that is not absorbed even when the gas to be treated is brought into contact with the treatment solution to be discharged from the inside of the absorber 11. The first flow path 21 allows a treatment solution accumulated in the absorber 11 to be extracted. The second flow path 22 allows a treatment solution returned from the emitter 14 to flow down from above.

By bringing a gas to be treated and a treatment solution into contact with each other, the absorber 11 causes the treatment solution to absorb an acidic compound in the gas to be treated and discharges the gas from which the acidic compound is removed. The absorber 11 only needs to be one that can continuously bring a gas to be treated and a treatment solution into contact with each other. As the absorber 11, for example, one that sprays a treatment solution to a flow path of a gas to be treated, one that causes a treatment solution to flow down along a filler arranged in a flow path of a gas to be treated, one that introduces a gas to be treated and a treatment solution into a large number of fine flow paths to merge a microflow path of the gas to be treated and a microflow path of the treatment solution, and the like can be used. Note that absorption of an acidic compound into a treatment solution is an exothermic reaction.

The first flow path 21 and the second flow path 22 are connected to the emitter 14. The first flow path 21 can introduce a treatment solution extracted from the absorber 11 into the emitter 14. The second flow path 22 can extract a treatment solution stored in the emitter 14.

The emitter 14 stores a treatment solution, and releases an acidic compound by heating the stored treatment solution to a temperature equal to or more than a temperature at which the acidic compound can be released. The release of an acidic compound from a treatment solution, that is, desorption of the acidic compound from a component contained in the treatment solution is an endothermic reaction. Note that when the treatment solution is heated as described above in the emitter 14, not only an acidic compound is released but also water contained in the treatment solution is evaporated. That is, in the emitter 14, an acidic compound and water vapor are released from the treatment solution.

The first flow path 21 is provided with the separator 12. The separator 12 is divided into a first region 32 and a second region 33 by a partition wall 31. A treatment solution discharged from the absorber 11 is stored in the first region 32. At that time, the treatment solution is phase-separated into the first phase portion and the second phase portion, and the second phase portion is located on an upper layer than the first phase portion. For this reason, when an amount of a treatment solution stored in the first region 32 increases, the second phase portion preferentially flows over the partition wall 31 into the second region 33 and is stored in the second region 33. A treatment solution stored in the first region 32 is discharged from a first solution flow path 35 connected to a lower portion of the first region 32. Further, a treatment solution stored in the second region 33 is discharged from a second solution flow path 36 connected to a lower portion of the second region 33. By discharging in this manner, a first solution mainly containing the first phase portion flows through the first solution flow path 35, and a second solution mainly containing the second phase portion flows through the second solution flow path 36. The separator 12 separates the first solution and the second solution in this manner. Note that a pump 37 and a pump 38 are provided in the first solution flow path 35 and the second solution flow path 36, respectively.

The heater 13 is connected to the second solution flow path 36. A second solution supplied from the second solution flow path 36 is heated by the heater 13 to remove dissolved oxygen from the second solution. That is, the heating treatment as the deoxygenation treatment is applied to the second solution. The heater 13 is a treatment unit that heats the second solution. As the heater 13, for example, one that directly or indirectly heats a treatment solution by electricity, steam, or an optional heat source such as a burner can be used. Oxygen (oxygen derived from dissolved oxygen) removed from the second solution by application of the deoxygenation treatment flows to an emission path 51 via an oxygen discharge path 41. Further, a second solution after the deoxygenation treatment is applied is mixed with a first solution flowing through the first solution flow path 35 via a second solution supply path 42. A mixed solution in which the first solution and a second solution after the deoxygenation treatment is applied are mixed is introduced into the emitter 14 via the first flow path 21.

The emission path 51 and a heating flow path 52 are connected to the emitter 14. An acidic compound separator 53 is provided in the emission path 51. The acidic compound separator 53 condenses water vapor by cooling a mixed gas of water vapor and an acidic compound released from a treatment solution, and separates condensed water and the acidic compound. A supply path 54 and a recirculation path 55 are connected to the acidic compound separator 53. The supply path 54 supplies an acidic compound separated by the acidic compound separator 53 to a supply destination. Water separated by the acidic compound separator 53 is recirculated to the emitter 14 via the recirculation path 55. Note that the acidic compound separator 53 and the recirculation path 55 can be omitted.

The heating flow path 52 is provided with a first heating unit 56. The first heating unit 56 heats the treatment solution, returns a part of the treatment solution to the emitter 14 via a recirculation path 57, and returns the remaining part of the treatment solution to the absorber 11 via the second flow path 22. The second flow path 22 is provided with a pump 59. The first heating unit 56 may be arranged to heat a treatment solution inside the emitter 14, but may be configured to heat a treatment solution extracted from the emitter 14 to the outside as illustrated in the drawing. Note that, as the first heating unit 56, for example, one that directly or indirectly heats a treatment solution by electricity, steam, or an optional heat source such as a burner can be used.

The heat exchanger 16 is connected to the first flow path 21 and the second flow path 22, and causes heat exchange between a treatment solution flowing through the first flow path 21 and a treatment solution flowing through the second flow path 22. The heat exchanger 16 is constituted by, for example, a plate heat exchanger or the like, but may be constituted by a microchannel heat exchanger capable of heat exchange between fluids having a relatively small temperature difference. By the above, energy efficiency can be improved.

The gas treatment device 100 can recover an acidic compound at high concentration from a gas to be treated containing an acidic compound by performing the absorbing step in the absorber 11, performing the separating step in the separator 12, performing the deoxygenation treatment step in the heater 13, and performing the releasing step in the emitter 14. Further, the gas treatment device 100 can suppress deterioration of a treatment solution to be used and use the treatment solution for recovery of the acidic compound for a long period of time by performing the deoxygenation treatment step in the heater 13.

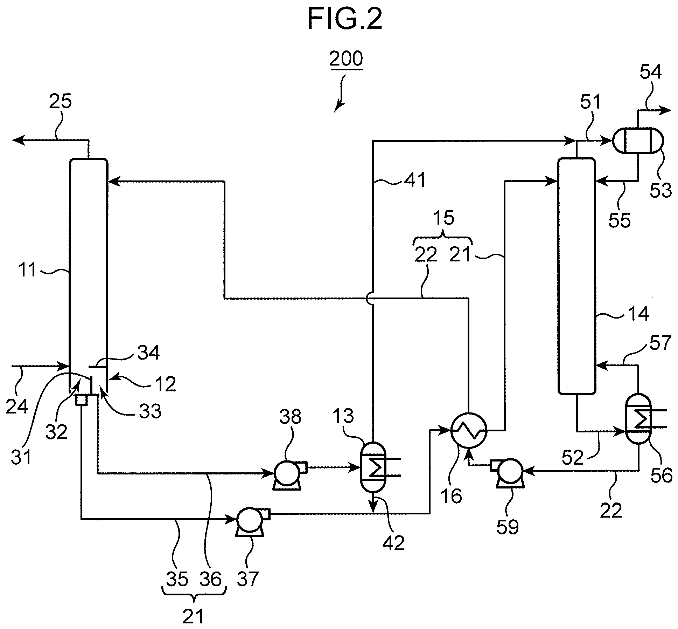

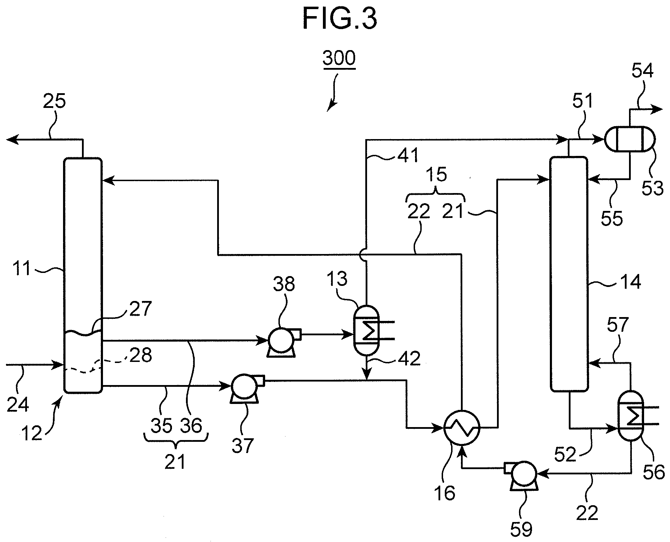

Examples of another device that performs the gas treatment method include a gas treatment device that performs the separating step in the separator 12 provided in the absorber 11, such as a gas treatment device 200 illustrated in FIG. 2 and a gas treatment device 300 illustrated in FIG. 3.

As illustrated in FIG. 2, the gas treatment device 200 includes the separator 12 in the absorber 11. The separator 12 is provided in a lower portion of the absorber 11 and is partitioned into the first region 32 and the second region 33 by the partition wall 31. Further, the separator 12 is provided with a partition wall 34 in a manner covering an upper portion of the second region. A treatment solution in the absorber 11 is stored in the first region 32. At that time, the treatment solution is phase-separated into the first phase portion and the second phase portion, and the second phase portion is located on an upper layer than the first phase portion. For this reason, when an amount of a treatment solution stored in the first region 32 increases, the second phase portion preferentially flows over the partition wall 31 into the second region 33 and is stored in the second region 33. Note that since the partition wall 34 is provided in the second region 33, the treatment solution does not flow into the second region 33 except for a portion flowing over the partition wall 31. A treatment solution stored in the first region 32 is discharged from a first solution flow path 35 connected to a lower portion of the first region 32. Further, a treatment solution stored in the second region 33 is discharged from a second solution flow path 36 connected to a lower portion of the second region 33. By discharging in this manner, a first solution mainly containing the first phase portion flows through the first solution flow path 35, and a second solution mainly containing the second phase portion flows through the second solution flow path 36. The separator 12 separates the first solution and the second solution in this manner. The gas treatment device 200 is similar to the gas treatment device 100 illustrated in FIG. 1 except that the gas treatment device 200 includes the separator 12 as described above.

As illustrated in FIG. 3, in the gas treatment device 300, a treatment solution stored in the absorber 11 is phase-separated into the first phase portion and the second phase portion by absorption of an acidic compound, and the second phase portion is located on an upper layer than the first phase portion. Then, the first solution flow path 35 is connected to a lower portion of the absorber 11, and the second solution flow path 36 is connected to an upper portion than the first solution flow path 35. Specifically, the second solution flow path 36 is connected below a liquid level 27 of the second phase portion and above an interface 28 between the first phase portion and the second phase portion. Further, the first solution flow path 35 is connected so as to be located in a lower portion than the interface 28 between the first phase portion and the second phase portion. By discharging a treatment solution from the first solution flow path 35 connected in this manner, a first solution mainly containing the first phase portion flows through the first solution flow path 35. Further, by discharging a treatment solution from the second solution flow path 36 connected as described above, a second solution mainly containing the second phase portion flows through the second solution flow path 36. The separator 12 separates the first solution and the second solution in this manner. The gas treatment device 300 is similar to the gas treatment device 100 illustrated in FIG. 1 except that the gas treatment device 300 includes the separator 12 as described above.

Like the gas treatment device 100, the gas treatment device 200 and the gas treatment device 300 can recover an acidic compound at high concentration from a gas to be treated containing the acidic compound. Further, deterioration of a treatment solution to be used can be suppressed, and the treatment solution can be used for a long period of time for recovering the acidic compound.

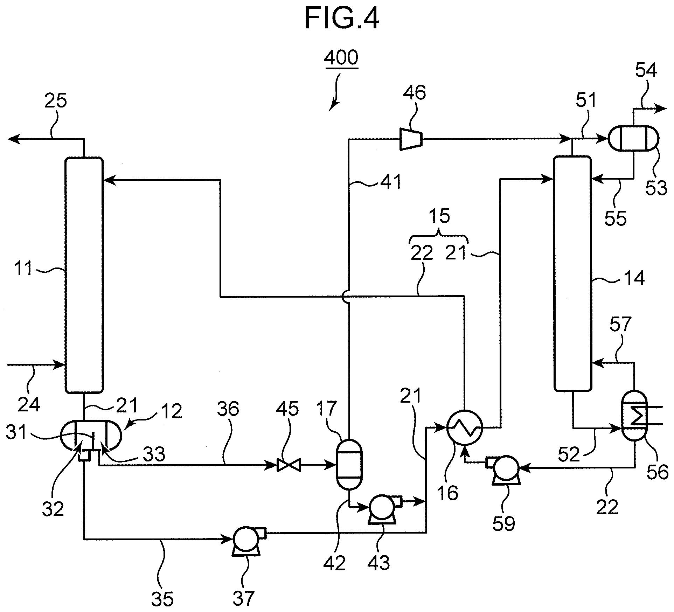

As another device for performing the gas treatment method, for example, as illustrated in FIGS. 4 to 8, a gas treatment device in which the deoxidizing step is performed in a unit other than the heater 13 can be used.

As illustrated in FIG. 4, a gas treatment device 400 includes a pressure reducer 17. The pressure reducer 17 is connected to the second solution flow path 36. The second solution flow path 36 includes a valve 45 upstream of the pressure reducer 17. An oxygen discharge path 41 for discharging oxygen (oxygen derived from dissolved oxygen) removed from the second solution by the pressure reducer 17 is connected to the pressure reducer 17. The oxygen discharge path 41 includes a compressor 46 downstream of the pressure reducer 17. The valve 45 is throttled to reduce pressure in the inside of the pressure reducer 17 by the compressor 46, so as to remove dissolved oxygen from a second solution supplied from the second solution flow path 36. That is, the pressure reduction treatment as the deoxygenation treatment is applied to the second solution. The pressure reducer 17 is a treatment unit that reduces pressure of the second solution. The compressor 46 is not particularly limited, and a centrifugal compressor or the like can be used. Oxygen (oxygen derived from dissolved oxygen) removed from the second solution by application of the deoxygenation treatment flows to an emission path 51 via an oxygen discharge path 41. Further, a second solution after the deoxygenation treatment is applied is mixed with a first solution flowing through the first solution flow path 35 via a second solution supply path 42. A pump 43 is provided in the first solution flow path 35. A mixed solution in which the first solution and a second solution after the deoxygenation treatment is applied are mixed is introduced into the emitter 14 via the first flow path 21. The gas treatment device 400 is similar to the gas treatment device 100 illustrated in FIG. 1 except that the deoxygenation treatment is performed by the pressure reducer 17.

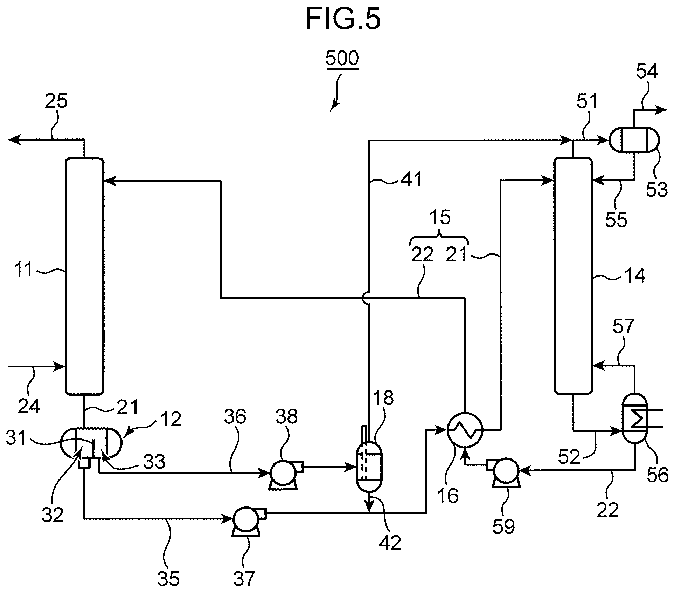

As illustrated in FIG. 5, a gas treatment device 500 includes an ultrasonic irradiator 18. The ultrasonic irradiator 18 is connected to the second solution flow path 36. Dissolved oxygen is removed from the second solution supplied from the second solution flow path 36 by irradiating the second solution with an ultrasonic wave by the ultrasonic irradiator 18. That is, the ultrasonic irradiation treatment as the deoxygenation treatment is applied to the second solution. The ultrasonic irradiator 18 is a treatment unit that irradiates the second solution with an ultrasonic wave. As the ultrasonic irradiator 18, a general ultrasonic generator or the like can be used. Oxygen (oxygen derived from dissolved oxygen) removed from the second solution by application of the deoxygenation treatment flows to an emission path 51 via an oxygen discharge path 41. Further, a second solution after the deoxygenation treatment is applied is mixed with a first solution flowing through the first solution flow path 35 via a second solution supply path 42. A mixed solution in which the first solution and a second solution after the deoxygenation treatment is applied are mixed is introduced into the emitter 14 via the first flow path 21. The gas treatment device 500 is similar to the gas treatment device 100 illustrated in FIG. 1 except that the deoxygenation treatment is performed by the ultrasonic irradiator 18.

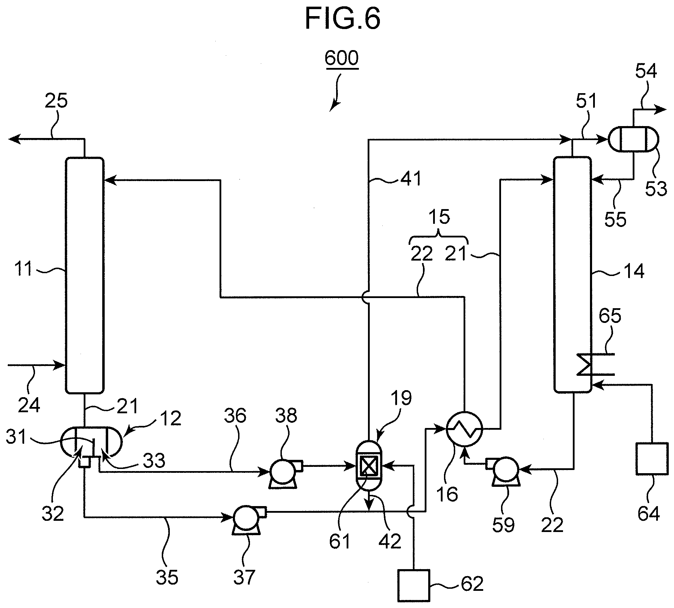

As illustrated in FIG. 6, a gas treatment device 600 includes a gas solution contact unit 19. The gas solution contact unit 19 is connected to the second solution flow path 36. The gas solution contact unit 19 includes a functional material 61 in the inside. A second solution circulated through the gas solution contact unit 19 comes into contact with the functional material 61. Further, the gas solution contact unit 19 includes a first hydrogen supply unit 62. The first hydrogen supply unit 62 can supply hydrogen to a second solution in the gas solution contact unit 19 by supplying hydrogen to the gas solution contact unit 19. Examples of the functional material 61 include a filler (a filler similar to a filler arranged in the absorber 11, or the like) and a noble metal catalyst. Note that the functional material 61 does not need to be provided. When a noble metal catalyst is used as the functional material 61, the second solution is brought into contact with the noble metal catalyst while hydrogen is supplied to the second solution by the first hydrogen supply unit 62. That is, the catalyst contact treatment is applied to the second solution as the deoxygenation treatment. By the above, dissolved oxygen is removed from a second solution supplied from the second solution flow path 36. That is, the catalyst contact treatment is applied to the second solution as the deoxygenation treatment. Further, even in a case where a material other than a noble metal catalyst (for example, a filler) is used as the functional material 61 and in a case where the functional material 61 is not provided (even in a case where a noble metal catalyst is used as the functional material 61), hydrogen is supplied to the second solution by the first hydrogen supply unit 62, so that dissolved oxygen is removed from the second solution supplied from the second solution flow path 36. That is, the hydrogen supply treatment is applied to the second solution as the deoxygenation treatment. The catalyst contact treatment can suitably remove dissolved oxygen from a second solution as compared with the hydrogen supply treatment. As the noble metal catalyst, the above-described noble metal catalyst or the like can be used. The first hydrogen supply unit 62 is not particularly limited as long as hydrogen can be supplied.

Further, the emitter 14 includes a second hydrogen supply unit 64 and a second heating unit 65. The second hydrogen supply unit 64 can supply hydrogen to a treatment solution in the emitter 14 by supplying hydrogen to the emitter 14. The second heating unit 65 can release an acidic compound from the treatment solution by heating the treatment solution in the emitter 14. As the second hydrogen supply unit 64 supplies hydrogen to a treatment solution in the emitter 14, a temperature (regeneration temperature) of the treatment solution at which the acidic compound can be released from the treatment solution (the first solution and the second solution) can be lowered. Since the regeneration temperature can be lowered as described above, a heating temperature of the treatment solution by the second heating unit 65 can be lowered. Further, in a case where a treatment unit that brings the second solution into contact with a noble metal catalyst while supplying hydrogen to the second solution is used, hydrogen to be supplied to the emitter 14 can also be supplied from the first hydrogen supply unit 62 that supplies hydrogen in the hydrogen supply treatment or the catalyst contact treatment. That is, the first hydrogen supply unit 62 and the second hydrogen supply unit 64 may be the same.

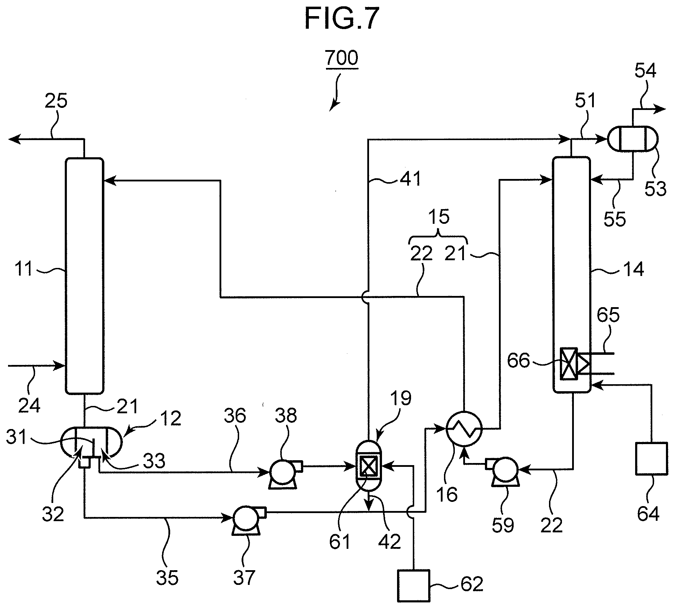

Further, since hydrogen is also supplied to the emitter 14, not only the noble metal catalyst is provided in the gas solution contact unit 19, but also a noble metal catalyst 66 may be provided in the emitter 14 as in a gas treatment device 700 illustrated in FIG. 7.

In the gas treatment device 600 and the gas treatment device 700, oxygen (oxygen derived from dissolved oxygen) removed from the second solution by performing the deoxygenation treatment flows to the emission path 51 via the oxygen discharge path 41. Further, a second solution after the deoxygenation treatment is applied is mixed with a first solution flowing through the first solution flow path 35 via a second solution supply path 42. A mixed solution in which the first solution and a second solution after the deoxygenation treatment is applied are mixed is introduced into the emitter 14 via the first flow path 21. The gas treatment device 600 and the gas treatment device 700 are similar to the gas treatment device 100 illustrated in FIG. 1 except that the deoxygenation treatment is performed in the gas solution contact unit 19 and the emitter 14 is changed to the above configuration. Further, the second hydrogen supply unit 64 may be provided in the emitter 14 in another gas treatment device without limitation to the gas treatment device 600 illustrated in FIG. 6 or the gas treatment device 700 illustrated in FIG. 7. By providing the second hydrogen supply unit 64, as described above, hydrogen is supplied from the second hydrogen supply unit 64 to a treatment solution in the emitter 14, and by doing so, a temperature (regeneration temperature) of the treatment solution at which the acidic compound can be released from the treatment solution (the first solution and the second solution) can be lowered.

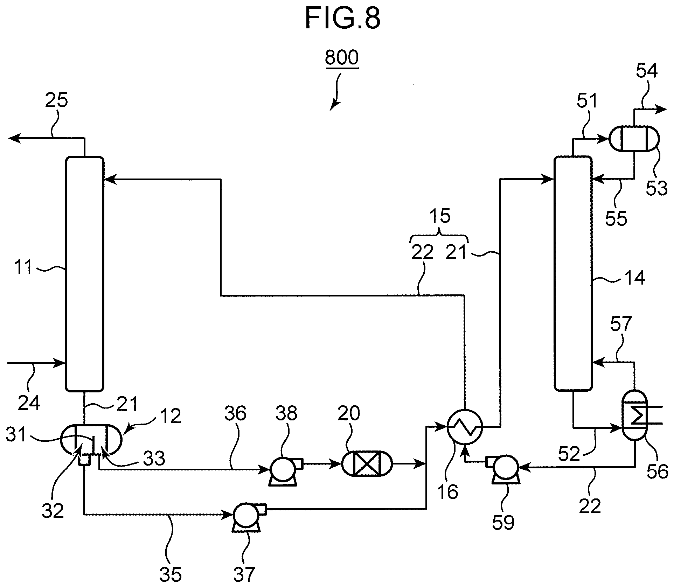

As illustrated in FIG. 8, a gas treatment device 800 includes a deoxidizing agent contact unit 20. The deoxidizing agent contact unit 20 is connected to the second solution flow path 36. By bringing the second solution into contact with the deoxidizing agent contact unit 20, dissolved oxygen is removed from a second solution supplied from the second solution flow path 36. That is, the deoxidizing agent contact treatment is applied to the second solution as the deoxygenation treatment. The deoxidizing agent contact unit 20 is a treatment unit that brings a deoxidizing agent into contact with the second solution. After the deoxygenation treatment is applied to the second solution, a mixed solution obtained by mixing the first solution and a second solution after the deoxygenation treatment is applied is introduced into the emitter 14. Note that in the deoxidizing agent contact treatment, since a generation amount of oxygen (oxygen derived from dissolved oxygen) removed from the second solution is small, there may be no outflow to an emission path via an oxygen discharge path. Further, the gas treatment device 800 may include an oxygen discharge path similarly to the gas treatment device 100 illustrated in FIG. 1. The gas treatment device 800 is similar to the gas treatment device 100 illustrated in FIG. 1 except that the oxygen discharge path is not provided and the deoxygenation treatment is performed in the deoxidizing agent contact unit 20.

Similarly to the gas treatment device 100, each of the gas treatment devices 200, 300, 400, 500, 600, 700, and 800 can recover an acidic compound at high concentration from a gas to be treated containing the acidic compound. Further, deterioration of a treatment solution to be used can be suppressed, and the treatment solution can be used for a long period of time for recovering the acidic compound.

The present description discloses techniques of various modes as described above, of which a main technique is summarized below.

According to one aspect of the present invention, there is provided a gas treatment method including a step of bringing a gas to be treated containing an acidic compound that generates acid by being dissolved in water into contact with a treatment solution phase-separated by absorption of the acidic compound to cause the acidic compound to be absorbed into the treatment solution, a step of separating the treatment solution, which is phase-separated into a first phase portion having relatively high content of the acidic compound and a second phase portion having relatively low content of the acidic compound as the acidic compound is absorbed into the treatment solution, into a first solution mainly containing the first phase portion and a second solution mainly containing the second phase portion, a step of applying deoxygenation treatment to the separated second solution, and a step of heating the first solution together with the second solution to which the deoxygenation treatment is applied so as to release the acidic compound from the first solution and the second solution.

According to such a configuration, deterioration of a treatment solution to be used is suppressed, and an acidic compound can be separated and recovered over a long period of time. This is considered to be due to a matter described below.

As described above, deterioration of a treatment solution due to separation and recovery of an acidic compound over a long period of time is considered to be deterioration of a component constituting the first phase portion (a component mainly contained in the first phase portion).

Examples of such deterioration first include deterioration in which a component constituting the first phase portion (a component mainly contained in the first phase portion, for example, an amine compound) is deteriorated by being heated, that is, thermal degradation. When a treatment solution that phase-separates into the first phase portion and the second phase portion by absorption of an acidic compound as described above is used as the treatment solution, a regeneration temperature of the treatment solution can be lowered as compared with a case where another treatment solution (treatment solution that does not phase-separate) is used. That is, even when a heating temperature of a treatment solution that absorbs an acidic compound is lowered, the acidic compound can be released from the treatment solution. From this, it is considered that thermal degradation of a component constituting the first phase portion (component mainly contained in the first phase portion) is suppressed. Therefore, it is considered that deterioration due to heating of the treatment solution, that is, thermal degradation is suppressed.

Examples of the deterioration include, other than the thermal degradation, deterioration in which a component constituting the first phase portion (component mainly contained in the first phase portion) is degraded by being oxidized with oxygen (dissolved oxygen) dissolved in the treatment solution, that is, oxidative degradation. In a case where a treatment solution that phase-separates into the first phase portion and the second phase portion by absorption of an acidic compound is used, thermal degradation is suppressed as described above, and therefore it is considered that the oxidative degradation has a large influence on deterioration of the treatment solution. In order to suppress the oxidative degradation considered to have a large influence, the present inventors have focused on reducing dissolved oxygen in the treatment solution by applying deoxygenation treatment to the treatment solution. At that time, it was also studied to apply deoxygenation treatment to the entire treatment solution, and to apply deoxygenation treatment to a first solution mainly containing the first phase portion containing a large amount of a component to be oxidatively degraded. As a result of further various studies, the present inventors have focused on the fact that an amount of oxygen (dissolved oxygen) dissolved in the second phase portion is larger than that in the first phase portion because the second phase portion having relatively low content of the acidic compound has polarity lower than that of the first phase portion. From this, the present inventors have found that it is effective to apply the deoxygenation treatment to the second solution mainly containing the second phase portion in order to suppress oxidative degradation of a component constituting the first phase portion (component mainly contained in the first phase portion). That is, the present inventors have found that it is effective to apply the deoxygenation treatment to the second solution, not the first solution mainly containing the first phase portion containing a large amount of components to be oxidatively degraded in order to suppress oxidative degradation of a component constituting the first phase portion (component mainly contained in the first phase portion).

As described above, it is considered that the oxidative degradation of a component (component mainly contained in the first phase portion) constituting the first phase portion can be suppressed by applying the deoxygenation treatment to a second solution mainly containing the second phase portion. Therefore, it is considered that deterioration (oxidative degradation) due to oxidation of the treatment solution is suppressed. It is considered that the oxidative degradation can be efficiently suppressed by applying deoxygenation treatment to a second solution mainly containing the second phase portion without applying deoxygenation treatment to the entire treatment solution.

Further, when treating an oxidizing atmosphere gas such as exhaust gas, oxidative degradation is generally more problematic than thermal degradation. Also from this point of view, it is considered that the fact that oxidative degradation can be efficiently suppressed suitably contributes to efficiently suppressing deterioration of the treatment solution to be used.

Furthermore, in the gas treatment method, deoxygenation treatment is applied to the second solution before the first solution and the second solution are mixed. From the above, deoxygenation treatment is applied to the second solution, which is a part of the treatment solution before the treatment solution is heated and an acidic compound is released from the treatment solution. From the above, the treatment solution to which deoxygenation treatment is applied is obtained at the time of heating when an acidic compound is released from the treatment solution. Since oxidative degradation is more likely to occur as temperature is higher, by applying deoxygenation treatment to the second solution, which is a treatment solution before being mixed with the first solution, the deoxygenation treatment is applied before heating for releasing the acidic compound from the treatment solution, and it is considered that oxidative degradation can be effectively suppressed.

From the above, it is considered that thermal degradation of the treatment solution can be suppressed, and oxidative degradation of the treatment solution can also be efficiently suppressed. Therefore, it is considered that deterioration of a treatment solution to be used is suppressed, and an acidic compound can be separated and recovered continuously over a long period of time. That is, it is considered that an acidic compound can be separated and recovered continuously over a long period of time without replenishing or replacing the treatment solution.

Further, in the gas treatment method, the treatment solution preferably contains water, an amine compound, and an organic solvent, in the first phase portion, content of the amine compound is preferably higher than content of the amine compound in the second phase portion, and in the second phase portion, content of the organic solvent is preferably higher than content of the organic solvent in the first phase portion.

According to such a configuration, deterioration of a treatment solution to be used is further suppressed, and an acidic compound can be separated and recovered over a longer period of time.

Further, in the gas treatment method, the deoxygenation treatment is preferably of at least one type selected from a group including a treatment of heating the second solution, a treatment of bringing the second solution into contact with a deoxidizing agent, a treatment of reducing pressure of the second solution, and a treatment of irradiating the second solution with an ultrasonic wave.

According to such a configuration, dissolved oxygen can be suitably removed from the second solution by the deoxygenation treatment, and deterioration of a treatment solution to be used can be further suppressed. Therefore, an acidic compound can be separated and recovered continuously over a longer period of time.

Further, in the gas treatment method, the deoxygenation treatment is preferably a hydrogen supply treatment of supplying hydrogen to the second solution.

According to such a configuration, dissolved oxygen can be suitably removed from the second solution by the deoxygenation treatment. It is considered that this is because oxygen partial pressure decreases by supply of hydrogen to the second solution, and deoxygenation occurs due to the decrease in the oxygen partial pressure. As described above, dissolved oxygen is suitably removed from the second solution, and deterioration of a treatment solution to be used can be further suppressed. Therefore, an acidic compound can be separated and recovered continuously over a longer period of time.

Further, in the gas treatment method, the deoxygenation treatment is preferably a treatment of bringing the second solution into contact with a noble metal catalyst while supplying hydrogen to the second solution in the hydrogen supply treatment.

According to such a configuration, dissolved oxygen can be more suitably removed from the second solution by the deoxygenation treatment. This is considered to be because a reaction of reducing oxygen with hydrogen (reaction of producing water from hydrogen and oxygen) is promoted by presence of a noble metal catalyst in addition to the above-described deoxygenation due to the decrease in oxygen partial pressure described above. As described above, by performing deoxygenation by bringing the second solution to which hydrogen is supplied into contact with a noble metal catalyst in addition to deoxygenation by the hydrogen supply treatment, dissolved oxygen is more suitably removed from the second solution, and deterioration of a treatment solution to be used can be further suppressed. Therefore, an acidic compound can be separated and recovered continuously over a longer period of time.

In the gas treatment method, hydrogen is preferably brought into contact with the first solution and the second solution when the acidic compound is released from the first solution and the second solution.

According to such a configuration, it is possible to further suppress deterioration of a treatment solution to be used, to separate and recover an acidic compound for a longer period of time, and to further reduce energy required for separating and recovering an acidic compound. This is considered to be due to a matter described below.

When the acidic compound is released from the first solution and the second solution, by bringing hydrogen into contact with the first solution and the second solution, a temperature (regeneration temperature) of the treatment solution capable of releasing the acidic compound from the treatment solution (the first solution and the second solution) can be lowered. For this reason, it is considered that not only thermal degradation of the treatment solution can be further suppressed, but also energy required for separating and recovering an acidic compound can be reduced.

Furthermore, in a case where a deoxygenation treatment using hydrogen such as the hydrogen supply treatment is used as the deoxygenation treatment, both gas supplied at the time of this treatment and gas used when releasing the acidic compound are hydrogen. From the above, these components can be easily supplied. For example, it is also possible to supply hydrogen used for the deoxygenation treatment and hydrogen used for releasing the acidic compound from the same hydrogen supply unit.

Further, according to another aspect of the present invention, there is provided a gas treatment device including an absorber that brings a gas to be treated containing an acidic compound that generates acid by being dissolved in water into contact with a treatment solution phase-separated by absorption of the acidic compound to cause the acidic compound to be absorbed into the treatment solution, a separator that separates the treatment solution, which is phase-separated into a first phase portion having relatively high content of the acidic compound and a second phase portion having relatively low content of the acidic compound as the acidic compound is absorbed into the treatment solution in the absorber, into a first solution mainly containing the first phase portion and a second solution mainly containing the second phase portion, a deoxygenation treatment unit that applies deoxygenation treatment to the separated second solution, and an emitter that heats the first solution together with the second solution to which the deoxygenation treatment is applied so as to release the acidic compound from the first solution and the second solution.

According to such a configuration, as described above, since a regeneration temperature of the treatment solution can be lowered, it is considered that thermal degradation of a component constituting the first phase portion (component mainly contained in the first phase portion, for example, an amine compound) in the emitter can be suppressed. Further, it is considered that oxidative degradation of a component constituting the first phase portion can also be efficiently suppressed by a deoxygenation treatment by the deoxygenation treatment unit as described above. Therefore, according to the gas treatment device, deterioration of a treatment solution to be used is suppressed, and an acidic compound can be separated and recovered over a long period of time.

Further, in the gas treatment device, the treatment solution preferably contains water, an amine compound, and an organic solvent, in the first phase portion, content of the amine compound is preferably higher than content of the amine compound in the second phase portion, and in the second phase portion, content of the organic solvent is preferably higher than content of the organic solvent in the first phase portion.

According to such a configuration, deterioration of a treatment solution to be used is further suppressed, and an acidic compound can be separated and recovered over a longer period of time.

Further, in the gas treatment device, the deoxygenation treatment unit is preferably of at least one type selected from a group including a treatment unit that heats the second solution, a treatment unit that brings the second solution into contact with a deoxidizing agent, a treatment unit that reduces pressure of the second solution, and a treatment unit that irradiates the second solution with an ultrasonic wave.

According to such a configuration, dissolved oxygen can be suitably removed from the second solution by deoxygenation treatment by the deoxygenation treatment unit, and deterioration of a treatment solution to be used can be further suppressed. Therefore, an acidic compound can be separated and recovered continuously over a longer period of time.

Further, in the gas treatment device, the deoxygenation treatment unit preferably includes a hydrogen supply unit that supplies hydrogen to the second solution.

According to such a configuration, dissolved oxygen can be suitably removed from the second solution by deoxygenation treatment by the deoxygenation treatment unit, and deterioration of a treatment solution to be used can be further suppressed. Therefore, an acidic compound can be separated and recovered continuously over a longer period of time.

Further, in the gas treatment device, the deoxygenation treatment unit preferably further includes a noble metal catalyst with which the second solution is brought into contact while supplying hydrogen to the second solution by the hydrogen supply unit.

According to such a configuration, deoxygenation is performed by bringing the second solution supplied with hydrogen into contact with a noble metal catalyst in addition to deoxygenation by supplying hydrogen to the second solution, so that dissolved oxygen can be more suitably removed from the second solution. Therefore, deterioration of a treatment solution to be used can be further suppressed, and an acidic compound can be separated and recovered continuously over a longer period of time.

Further, the gas treatment device preferably further includes a hydrogen supply unit that supplies hydrogen to the emitter to bring hydrogen into contact with the first solution and the second solution.

According to such a configuration, in the emitter, a temperature (regeneration temperature) of the treatment solution at which the acidic compound can be released from the treatment solution (the first solution and the second solution) can be lowered. For this reason, it is considered that not only thermal degradation of the treatment solution can be further suppressed, but also energy required for separating and recovering an acidic compound can be reduced. Therefore, it is possible to further suppress deterioration of a treatment solution to be used, to separate and recover an acidic compound for a longer period of time, and to further reduce energy required for separating and recovering an acidic compound. Furthermore, in a case where the hydrogen supply unit is used as the deoxygenation treatment unit, it is possible to facilitate supply of hydrogen for these. For example, it is also possible to supply hydrogen used in the deoxygenation treatment unit and hydrogen used in the emitter from the same hydrogen supply unit.

According to the present invention, it is possible to provide a gas treatment method and a gas treatment device capable of suppressing deterioration of a treatment solution to be used and separating and recovering an acidic compound over a long period of time.

This application is based on Japanese Patent Application No. 2022-140628 filed on September 5, 2022, the content of which is included in the present application.

Although the present invention has been appropriately and sufficiently described through the embodiments above to express the present invention, it should be recognized that a person skilled in the art can easily modify and/or improve the above-described embodiments. Therefore, unless a change or improvement made by a person skilled in the art is at a level departing from the scope of rights of the claims described in claims, the change or improvement is interpreted to be included in the scope of rights of the claims.

**Industrial Applicability**

According to the present invention, a gas treatment method and a gas treatment device capable of suppressing deterioration of a treatment solution to be used and separating and recovering an acidic compound over a long period of time are provided.

**Claims**

1. gas treatment method comprising:

   a step of bringing a gas to be treated containing an acidic compound that generates acid by being dissolved in water into contact with a treatment solution phase-separated by absorption of the acidic compound to cause the acidic compound to be absorbed into the treatment solution;
   a step of separating the treatment solution, which is phase-separated into a first phase portion having relatively high content of the acidic compound and a second phase portion having relatively low content of the acidic compound as the acidic compound is absorbed into the treatment solution, into a first solution mainly containing the first phase portion and a second solution mainly containing the second phase portion;

a step of applying deoxygenation treatment to the separated second solution; and

a step of heating the first solution together with the second solution to which the deoxygenation treatment is applied so as to release the acidic compound from the first solution and the second solution.

2. The gas treatment method according to claim 1, wherein

the treatment solution contains water, an amine compound, and an organic solvent,

in the first phase portion, content of the amine compound is higher than content of the amine compound in the second phase portion, and

in the second phase portion, content of the organic solvent is higher than content of the organic solvent in the first phase portion.

3. The gas treatment method according to claim 1 or 2, wherein the deoxygenation treatment is of at least one type selected from a group including a treatment of heating the second solution, a treatment of bringing the second solution into contact with a deoxidizing agent, a treatment of reducing pressure of the second solution, and a treatment of irradiating the second solution with an ultrasonic wave.

4. The gas treatment method according to claim 1 or 2, wherein the deoxygenation treatment is a hydrogen supply treatment of supplying hydrogen to the second solution.

5. The gas treatment method according to claim 4, wherein the deoxygenation treatment is a treatment of bringing the second solution into contact with a noble metal catalyst while supplying hydrogen to the second solution in the hydrogen supply treatment.

6. The gas treatment method according to claim 3, wherein hydrogen is brought into contact with the first solution and the second solution when the acidic compound is released from the first solution and the second solution.

7. The gas treatment method according to claim 4, wherein hydrogen is brought into contact with the first solution and the second solution when the acidic compound is released from the first solution and the second solution.

8. The gas treatment method according to claim 5, wherein hydrogen is brought into contact with the first solution and the second solution when the acidic compound is released from the first solution and the second solution.

9. gas treatment device comprising:

an absorber that brings a gas to be treated containing an acidic compound that generates acid by being dissolved in water into contact with a treatment solution phase-separated by absorption of the acidic compound to cause the acidic compound to be absorbed into the treatment solution;

a separator that separates the treatment solution, which is phase-separated into a first phase portion having relatively high content of the acidic compound and a second phase portion having relatively low content of the acidic compound as the acidic compound is absorbed into the treatment solution in the absorber, into a first solution mainly containing the first phase portion and a second solution mainly containing the second phase portion;

a deoxygenation treatment unit that applies deoxygenation treatment to the separated second solution; and

an emitter that heats the first solution together with the second solution to which the deoxygenation treatment is applied so as to release the acidic compound from the first solution and the second solution.

10. The gas treatment device according to claim 9, wherein

the treatment solution contains water, an amine compound, and an organic solvent,

in the first phase portion, content of the amine compound is higher than content of the amine compound in the second phase portion, and

in the second phase portion, content of the organic solvent is higher than content of the organic solvent in the first phase portion.

11. The gas treatment device according to claim 9 or 10 wherein the deoxygenation treatment unit is of at least one type selected from a group including a treatment unit that heats the second solution, a treatment unit that brings the second solution into contact with a deoxidizing agent, a treatment unit that reduces pressure of the second solution, and a treatment unit that irradiates the second solution with an ultrasonic wave.

12. The gas treatment device according to claim 9 or 10, wherein the deoxygenation treatment unit includes a hydrogen supply unit that supplies hydrogen to the second solution.

13. The gas treatment device according to claim 12, wherein the deoxygenation treatment unit further includes a noble metal catalyst with which the second solution is brought into contact while supplying hydrogen to the second solution by the hydrogen supply unit.

14. The gas treatment device according to claim 11, further comprising a hydrogen supply unit that supplies hydrogen to the emitter to bring hydrogen into contact with the first solution and the second solution.

15. The gas treatment device according to claim 12, further comprising a hydrogen supply unit that supplies hydrogen to the emitter to bring hydrogen into contact with the first solution and the second solution.

16. The gas treatment device according to claim 13, further comprising a hydrogen supply unit that supplies hydrogen to the emitter to bring hydrogen into contact with the first solution and the second solution.

# FIG.1

# FIG.2

# FIG.3

# FIG.4

# FIG.5

# FIG.6

# FIG.7

# FIG.8

800

## INTERNATIONAL SEARCH REPORT

| International application No. |
| --- |
| **PCT/JP2023/021980** |

**A. CLASSIFICATION OF SUBJECT MATTER**

***B01D 53/14*** (2006.01)i; ***B01D 19/00*** (2006.01)i; ***B01D 53/62*** (2006.01)i; ***B01D 53/78*** (2006.01)i; ***B01D 53/96*** (2006.01)i
FI: B01D53/14 220; B01D53/14 311; B01D53/78; B01D53/96; B01D19/00 C; B01D19/00 D; B01D19/00 F; B01D53/62 ZAB

According to International Patent Classification (IPC) or to both national classification and IPC

**B. FIELDS SEARCHED**

Minimum documentation searched (classification system followed by classification symbols)

B01D53/14; B01D19/00; B01D53/62; B01D53/78; B01D53/96

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2018-187553 A (KOBE STEEL LTD) 29 November 2018 (2018-11-29) | 1-16 |
| A | JP 2022-60721 A (KOBE STEEL LTD) 15 April 2022 (2022-04-15) | 1-16 |
| A | JP 2007-137725 A (TOSHIBA CORP) 07 June 2007 (2007-06-07) | 1-16 |
| A | JP 2011-115709 A (TOSHIBA CORP) 16 June 2011 (2011-06-16) | 1-16 |
| A | JP 2020-151662 A (MITSUBISHI HEAVY INDUSTRIES ENGINEERING, LTD.) 24 September 2020 (2020-09-24) | 1-16 |
| A | JP 2020-195998 A (KOBE STEEL LTD) 10 December 2020 (2020-12-10) | 1-16 |
| A | JP 2012-106180 A (TOSHIBA CORP) 07 June 2012 (2012-06-07) | 1-16 |
| A | US 2012/0219482 A1 (ALSTOM TECHNOLOGY LTD) 30 August 2012 (2012-08-30) | 1-16 |
| A | CN 107149865 A (HUAZHONG AGRICULTURAL UNIVERSITY) 12 September 2017 (2017-09-12) | 1-16 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **12 July 2023** | **01 August 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT
### Information on patent family members

International application No.

**PCT/JP2023/021980**

| Patent document cited in search report | | | Publication date (day/month/year) | Patent family member(s) | | | Publication date (day/month/year) |
|---|---|---|---|---|---|---|---|
| JP | 2018-187553 | A | 29 November 2018 | US | 2018/0311610 | A1 | |
| | | | | CN | 108786380 | A | |
| JP | 2022-60721 | A | 15 April 2022 | WO | 2022/074977 | A1 | |
| JP | 2007-137725 | A | 07 June 2007 | (Family: none) | | | |
| JP | 2011-115709 | A | 16 June 2011 | US | 2012/0230875 | A1 | |
| | | | | WO | 2011/068007 | A1 | |
| | | | | EP | 2508246 | A1 | |
| | | | | EP | 2786794 | A1 | |
| | | | | CN | 102905773 | A | |
| JP | 2020-151662 | A | 24 September 2020 | US | 2022/0152550 | A1 | |
| | | | | WO | 2020/189094 | A1 | |
| | | | | EP | 3925685 | A1 | |
| JP | 2020-195998 | A | 10 December 2020 | US | 2022/0226769 | A1 | |
| | | | | WO | 2020/241089 | A1 | |
| | | | | EP | 3978099 | A1 | |
| | | | | CN | 113891758 | A | |
| JP | 2012-106180 | A | 07 June 2012 | US | 2012/0118162 | A1 | |
| | | | | US | 2015/0258490 | A1 | |
| | | | | EP | 2455154 | A1 | |
| | | | | CA | 2757781 | A1 | |
| | | | | CN | 102527191 | A | |
| | | | | CN | 104759188 | A | |
| US | 2012/0219482 | A1 | 30 August 2012 | WO | 2012/115992 | A1 | |
| | | | | CA | 2828220 | A1 | |
| | | | | CN | 103379951 | A | |
| CN | 107149865 | A | 12 September 2017 | (Family: none) | | | |

Form PCT/ISA/210 (patent family annex) (January 2015)

**REFERENCES CITED IN THE DESCRIPTION**

**Patent documents cited in the description**

- JP 2018187553 A

- JP 2022140628 A